# EUROPÄISCHE PATENTSCHRIFT

(11) **EP 4 441 393 B1**
(45) Veröffentlichungstag und Bekanntmachung des Hinweises auf die Patenterteilung: **15.10.2025**
(21) Anmeldenummer: 22813547.1
(22) Anmeldetag: 07.11.2022
(51) Int. Cl.: F16H 57/04

(54) **GETRIEBE MIT EINEM ÖLFÜHRUNGSKANALTEIL**
TRANSMISSION COMPRISING AN OIL DUCT PART
TRANSMISSION COMPRENANT UNE PIÈCE DE CONDUIT D'HUILE

(30) Priorität: 30.11.2021 DE 102021213485
(43) Veröffentlichungstag der Anmeldung: 09.10.2024
(73) Patentinhaber: Robert Bosch GmbH, 70442 Stuttgart (DE)
(72) Erfinder: ARMBRUSTER, Martin, 74336 Brackenheim (DE); HENN, Andreas, 73433 Aalen (DE); SARETZKI, Manfred, 70180 Stuttgart (DE); MEHNERT, Benjamin Lukas, 71701 Schwieberdingen (DE)
(86) Internationale Anmeldenummer: PCT/EP2022/080919
(87) Internationale Veröffentlichungsnummer: WO 2023/099119

(56) Entgegenhaltungen:
- EP-A1- 2 700 849
- DE-B- 1 291 966
- JP-A- 2005 083 491

## Beschreibung

### Stand der Technik

Im Stand der Technik werden Getriebe für Kraftfahrzeuge insbesondere auch in Kombination mit einem elektromotorischen Antrieb eingesetzt. Dabei müssen die Getriebeelemente des Getriebes wie bei herkömmlichen Getrieben auch mit Öl geschmiert werden. Um den Getriebewirkungsgrad zu steigern und um Kosten zu senken, kann auf eine in herkömmlichen Getrieben oft eingesetzte Ölpumpe zur Getriebeschmierung verzichtet werden. Die Schmierung und Kühlung der Getriebeelemente erfolgt vorzugsweise durch eine passive Ölverteilung. Die Schmierung der rotierenden Getriebeelemente ist wichtig für die Zuverlässigkeit des Getriebes. Eine nicht ausreichende Schmierung kann eine Mangelversorgung der Lager der Getriebeelemente und der Dichtringe mit Öl bewirken. Dies kann zu einem erhöhten Verschleiß bis hin zum Ausfall der Getriebeelemente führen.

Aus der DE 10 2017 108 748 B3 ist ein Getriebe für ein Kraftfahrzeug bekannt, welches ein Getriebegehäuse und wenigstens ein in dem Getriebegehäuse angeordneten Getriebezahnrad aufweist, wobei das Getriebezahnrad wenigstens teilweise in einem Ölsumpf des Getriebes angeordnet ist. Das rotierende Getriebezahnrad wälzt sich mit einem Abschnitt durch den Ölsumpf und nimmt dabei Öl auf. Ein Vorgang der in der Fachsprache oft als Planschen beschrieben wird. Um von dem Getriebezahnrad aufgenommenes Öl gezielter im Getriebe zu verteilen, ist ein Ölführungskanalteil vorgesehen, welches als Einlegeteil in das Getriebe eingesetzt wird. Das Ölführungskanalteil ist brillenartig aufgebaut und weist mehrere Blenden und einen Leitkanal mit einer Aufnahmeöffnung und einer Auslassöffnung auf, wobei der Leitkanal von der Aufnahmeöffnung bis zur Auslassöffnung eine Ölleitrichtung und eine senkrecht zur Ölleitrichtung umlaufend geschlossene Kanalwand aufweist. In der DE 10 2017 108 748 B3 wird die Kanalwand durch einen um eine Zahnradachse eines Getriebezahnrades des Getriebes gekrümmten Halbbogen-Hohlkörper gebildet, der sich in einem vorbestimmten Einbauzustand des Ölführungskanalteils überwiegend oberhalb eines Ölsumpfpegels des Getriebes befindet. Der gebogene Leitkanal weist eine als Fangmaul ausgebildete Aufnahmeöffnung zur Aufnahme von Öl auf, das von einem anderen Getriebezahnrad, welches mit dem von dem Halbbogen-Hohlkörper umgegebenen Getriebezahnrad kämmt, aufgeworfen und von dem zweiten Getriebezahnrad zu dem Fangmaul weiter transportiert wird. Ein von dem Fangmaul abgewandter und bis auf eine Drosselbohrung geschlossen ausgebildeter Endabschnitt des Halbbogen-Hohlkörpers bildet in der DE 10 2017 108 748 B3 einen Ölsammelbereich zur Ansammlung von durch den Leitkanal geförderten Öl. Die Drosselbohrung bildet die einzige Auslassöffnung des Leitkanals und stellt daher gleichzeitig einen Ablauf für das Öl aus dem wenigstens einen Ölsammelbereich dar. Die Drosselbohrung befindet sich vertikal über dem Zahneingriffsbereich der beiden Getriebezahnräder, so dass der abfließende Ölstrom in deren Zahneingriffsbereich abfließt und die Kontaktflächen der Zähne benetzt.

Aus der EP 2 700 849 A1 ist eine Getriebe mit einem Ölführungskanalteil mit Leitkanal bekannt, wobei der Leitkanal von einer Aufnahmeöffnung an einer Stirnseite eines Getriebezahnrades bis zu einer Auslassöffnung eine Ölleitrichtung aufweist und eine senkrecht zur Ölleitrichtung umlaufend geschlossene Kanalwand aufweist, wobei das Ölführungskanalteil weiterhin wenigstens einen Ölsammelbereich zur Ansammlung von durch den Leitkanal geleitetem Öl aufweist, wobei das Ölführungskanalteil wenigstens einen Ablauf für Öl aus dem wenigstens einen Ölsammelbereich aufweist, wobei durch ein Getriebezahnrad aus dem Ölsumpf aufgeworfenes Öl in die Aufnahmeöffnung und entlang der Ölleitrichtung des Leitkanals zur Auslassöffnung gelangt. Der Ölsammelbereich wird durch ein Sammelbecken mit einem Beckenboden gebildet, wobei das Ölführungskanalteil in dem Getriebegehäuse derart angeordnet ist, dass der Beckenboden oberhalb des Getriebezahnrades positioniert ist und die Ölleitrichtung von der Aufnahmeöffnung bis zur Auslassöffnung entgegen der Schwerkraft verläuft.

Weitere Getriebe mit einem Ölführungskanalteil sind aus der JP 2005 083491 A und aus der DE 1 291 966 B bekannt.

### Offenbarung der Erfindung

Die Erfindung betrifft ein Getriebe, insbesondere Kraftfahrzeuggetriebe, mit einem Getriebegehäuse und wenigstens einem in dem Getriebegehäuse angeordneten Getriebezahnrad, wobei das Getriebezahnrad wenigstens teilweise in einem Ölsumpf des Getriebes angeordnet ist, wobei das Getriebe ein Ölführungskanalteil aufweist, wobei das Ölführungskanalteil einen Leitkanal mit einer Aufnahmeöffnung und mit einer Auslassöffnung aufweist, wobei der Leitkanal von der Aufnahmeöffnung bis zur Auslassöffnung eine Ölleitrichtung und eine senkrecht zur Ölleitrichtung umlaufend geschlossene Kanalwand aufweist, wobei das Ölführungskanalteil weiterhin wenigstens einen Ölsammelbereich zur Ansammlung von durch den Leitkanal geleitetem Öl aufweist, wobei das Ölführungskanalteil wenigstens einen Ablauf für Öl aus dem wenigstens einen Ölsammelbereich aufweist, wobei das Ölführungskanalteil in dem Getriebegehäuse derart angeordnet ist, dass im Betrieb durch das Getriebezahnrad aus dem Ölsumpf aufgeworfenes Öl in die Aufnahmeöffnung und entlang der Ölleitrichtung des Leitkanals zur Auslassöffnung gelangt, wobei der wenigstens eine Ölsammelbereich ein erstes Sammelbecken umfasst, wobei das erste Sammelbecken eine erste Beckenwand und einen ersten Beckenboden aufweist, wobei das Ölführungskanalteil in einem vorbestimmten Einbauzustand, der eine Ausrichtung des Ölführungskanalteils in dem Getriebegehäuse relativ zur Schwerkraft definiert, in dem Getriebegehäuse derart angeordnet ist, dass die Aufnahmeöffnung an der Stirnseite des wenigstens teilweise in dem Ölsumpf angeordneten Getriebezahnrades und der erste Beckenboden oberhalb des Getriebezahnrades positioniert ist und die Ölleitrichtung von der Aufnahmeöffnung bis zur Auslassöffnung entgegen der Schwerkraft verläuft. Erfindungsgemäß ist vorgesehen, dass das Getriebe eine Antriebswelle und eine Ausgangswelle aufweist, wobei mittels des Getriebezahnrades die Ausgangswelle antreibbar ist, wobei ein Koppelelement mit dem Getriebezahnrad derart gekoppelt ist, dass das Getriebezahnrad mittels des Koppelelements angetrieben werden kann, wobei in dem Getriebe eine Kupplungseinrichtung mit einem Kupplungselement vorgesehen ist, wobei das Kupplungselement drehfest mit der Antriebswelle gekoppelt ist, wobei mittels der Kupplungseinrichtung das Kupplungselement drehfest mit dem Koppelelement gekoppelt und von diesem abgekoppelt werden kann und wobei das Ölführungskanalteil einen ersten Ablauf aufweist, der oberhalb des ersten Beckenbodens von der ersten Beckenwand abragt und eine Ablauföffnung aufweist, durch die ablaufendes Öl zu einem Lager eines auf der Antriebswelle drehbar gelagerten mit dem Koppelelement drehfest gekoppelten Ritzels geführt wird.

Im Kontext der vorliegenden Anmeldung ist unter einem "Öl" ein getriebetaugliches flüssiges Schmiermittel zu verstehen, unabhängig davon ob dieses im Handel als Öl vermarktet wird. Insbesondere kann es sich um ein als ATF (Automatic Transmission Fluid) bezeichnetes Schmiermittel oder ähnliche Substanzen handeln.

Unter einem vorbestimmten Einbauzustand, der eine Ausrichtung des Ölführungskanalteils in dem Getriebegehäuse relativ zur Schwerkraft definiert, wird ein Einbauzustand verstanden, welcher eine bestimmte Ausrichtung des Ölführungskanalteils relativ zu dem Getriebegehäuse bei bekannter Ausrichtung des zugehörigen Getriebes relativ zum Erdschwerfeld darstellt. Die Ausrichtung des Getriebes relativ zum Erdschwerfeld ist für eine Normallage des Getriebes in der Regel bekannt, wobei die Normallage diejenige Lage ist, in welcher das Getriebe im bestimmungsgemäßen Anwendungsfall relativ zur Schwerkraft ausgerichtet ist. Ist das Getriebe ein Kraftfahrzeuggetriebe, so nimmt das Getriebe eine bestimmte Ausrichtung zur Schwerkraft der Erde ein, wenn das Kraftfahrzeug in der Normallage relativ zum Erdschwerfeld waagerecht ausgerichtet ist. Dies gilt ganz unabhängig davon, ob das Kraftfahrzeug tatsächlich waagerecht zum Erdschwerfeld bewegt wird oder eine Steigung mit einem Neigungswinkel befährt. Aus einer vorbekannten Einbaulage des Getriebes im Kraftfahrzeug kann daher grundsätzlich abgeleitet werden, wie ein Ölführungskanalteil im Getriebe zu verbauen ist, damit das Ölführungskanalteil in der Normallage relativ zur Schwerkraft eine bestimmte Ausrichtung einnimmt. Da bei den meisten möglichen Fahrzuständen des Kraftfahrzeuges der Neigungswinkel bei Talfahrten oder Bergfahren nur sehr moderat um +/- 20° von der Waagerechten abweicht, wird bei der geometrischen Auslegung des Ölführungskanalteils, der Einbauzustand auf eine waagerechte Fahrzeuglage angepasst.

Unter einem Ölführungskanalteil wird ein Bauteil verstanden, welches wenigstens einen Leitkanal für den Öltransport aufweist. Das Ölführungskanalteil kann außerdem dazu ausgebildet sein, dem Ölführungskanalteil zugeführtes Öl unter dem Einfluss der Schwerkraft in dem Ölführungskanalteil zu verteilen. Das Ölführungskanalteil kann insbesondere als Einlegeteil ausgebildet sein, welches beim Zusammenbau des Getriebes in dieses eingesetzt wird. Es ist aber auch möglich, das Ölführungskanalteil durch nach Innen vorspringende Strukturen des Gehäuseteils des Getriebegehäuses auszubilden. Vorzugsweise ist das Ölführungskanalteil jedoch ein separat gefertigtes Einlegeteil. Dieses kann aus Kunststoff oder Metall oder einem Kunststoff-Metall-Verbund gefertigt werden. Das Ölführungskanalteil kann einteilig oder mehrteilig aufgebaut sein. Insbesondere ist es möglich, das Ölführungskanalteil aus zwei oder mehr Schalenteilen zusammenzusetzen, welche über Rastverbindungen oder Clipsverbindungen mechanisch miteinander verbunden werden.

Im Kontext der vorliegenden Anmeldung wird relativ zu einem angenommenen Bezugspunkt durch die Begriffe "unten" oder "unterhalb" eine Position an einem in Richtung der Schwerkraft gesehen tiefer gelegenen Punkt und durch die Begriffe "oben" oder "oberhalb" eine Position an einem in Richtung der Schwerkraft gesehen höher gelegenen Punkt bezeichnet, wobei eine Ausrichtung des Ölführungskanalteils angenommen wird, die dem vorbestimmten Einbauzustand entspricht.

Unter einem Ölsumpf des Getriebes wird ein Bereich innerhalb des Getriebegehäuses verstanden, in dem sich Öl unter dem Einfluss der Schwerkraft ansammelt. Unter einem Getriebezahnrad, das wenigstens teilweise in einem Ölsumpf des Getriebes angeordnet ist, wird ein Getriebezahnrad verstanden, dass mit einem in Richtung der Schwerkraft unteren Teil in den Ölsumpf eintaucht, während ein oberer Teil des Getriebezahnrades aus dem Ölsumpf herausragt. Bei einer Rotation des Getriebezahnrades nimmt dieses Öl aus dem Ölsumpf auf und transportiert es bis zu einem Ablösepunkt oder Abschlagpunkt entgegen der Schwerkraft. Dieser Vorgang wird als "Planschen" bezeichnet. Die Umwälzung und Förderleistung des Öls durch das Getriebezahnrad hängt dabei direkt von der Drehzahl und über die Viskosität auch von der Temperatur ab. Die von dem wenigstens einen Getriebezahnrad aus dem Ölsumpf abtransportierte Ölmenge lässt den Pegel des Ölsumpfs im Betrieb absinken. Das wenigstens eine Getriebezahnrad kann daher als ein ölförderndes Getriebezahnrad angesehen werden. Von dem wenigstens einen Getriebezahnrad und gegebenenfalls weiteren Getriebezahnrädern bei schneller Rotation im Getriebegehäuse verspritztes Öl kann dabei an Stellen gelangen, von denen aus kein rascher Rücklauf in den Ölsumpf erfolgt. Diese Ölmengen nennt man Planschverluste. Um sicherzustellen, dass dennoch genügend Öl von dem wenigstens einen Getriebezahnrad gefördert wird und das Getriebe nicht trocken läuft, muss der Ölsumpf eine entsprechende Menge Öl aufweisen. Andererseits ist eine zu hohe Ölmenge im Ölsumpf nicht wünschenswert, da dies nachteilige Schleppverluste des Getriebes erhöht. Als Kompromiss ist es daher erstrebenswert, die durch das Getriebezahnrad abtransportierte Ölmenge möglichst gezielt den Schmierstellen im Getriebe zuzuführen, um Planschverluste zu vermeiden und den Pegel im Ölsumpf auf ein Niveau absenken zu können, bei dem Schleppverluste des Getriebes möglichst gering werden.

Unter einer drehfesten Kopplung oder Verbindung zweier Teile, wird verstanden, dass ein erstes Teil relativ zu einem zweiten Teil keine Drehbewegung ausführen kann. Dies schließt nicht aus, dass das erste Teil relativ zu dem zweiten Teil axial verschiebbar sein kann.

Das wenigstens eine Getriebezahnrad kann ein beliebiges Zahnrad in einem Satz von Zahnrädern sein. Insbesondere kann das Getriebezahnrad mit einem weiteren Getriebezahnrad kämmen und innerhalb des Getriebes zur Übertragung eines Drehmoments von einer Antriebswelle auf eine Ausgangswelle dienen. Dies schließt nicht aus das mehrere ölfördernde Getriebezahnräder im Getriebe vorhanden sein können.

### Vorteile der Erfindung

Das erfindungsgemäße Getriebe mit dem Ölführungskanalteil ermöglicht eine gezieltere Ölversorgung von Lagern rotierender Getriebeelementen innerhalb des Getriebegehäuses. Dies wird durch die Ausbildung eines ersten Sammelbeckens an dem Ölführungskanalteil, welches eine erste Beckenwand und einen ersten Beckenboden aufweist in Kombination mit einem speziell ausgebildeten Leitkanal erreicht. Das Ölführungskanalteil ist in einem vorbestimmten Einbauzustand, der eine Ausrichtung des Ölführungskanalteils in dem Getriebegehäuse relativ zur Schwerkraft definiert, in dem Getriebegehäuse derart angeordnet, dass die Aufnahmeöffnung an der Stirnseite des Getriebezahnrades und der erste Beckenboden oberhalb des Getriebezahnrades positioniert ist und die Ölleitrichtung von der Aufnahmeöffnung bis zur Auslassöffnung entgegen der Schwerkraft verläuft. Das Ölführungskanalteil wird vorteilhaft in einem Getriebe eingesetzt, das eine Antriebswelle und eine Ausgangswelle aufweist, wobei mittels des Getriebezahnrades die Ausgangswelle antreibbar ist, wobei ein Koppelelement mit dem Getriebezahnrad derart gekoppelt ist, dass das Getriebezahnrad mittels des Koppelelements angetrieben werden kann, wobei in dem Getriebe eine Kupplungseinrichtung mit einem Kupplungselement vorgesehen ist, wobei das Kupplungselement drehfest mit der Antriebswelle gekoppelt ist, wobei mit der Kupplungseinrichtung das Kupplungselement drehfest mit dem Koppelelement gekoppelt und von diesem abgekoppelt werden kann und wobei das Ölführungskanalteil einen ersten Ablauf aufweist, der oberhalb des ersten Beckenbodens von der ersten Beckenwand abragt und eine Ablauföffnung aufweist, durch die ablaufendes Öl zu einem Lager eines auf der Antriebswelle drehbar gelagerten und mit dem Koppelelement drehfest verbundenen Ritzels geführt wird. Bei einem derartigen Getriebe kann die Antriebswelle, welche beispielsweise direkt oder indirekt von einer elektrischen Maschine angetrieben wird, von der Ausgangswelle des Getriebes entkoppelt werden. Die Ausgangswelle kann beispielsweise mit den Rädern eines Kraftfahrzeuges gekoppelt sein. Wenn die elektrische Maschine deaktiviert wird, kann die Ausgangswelle von der Antriebswelle mittels der Kupplungseinrichtung entkoppelt werden. In einem bewegten Fahrzustand des Kraftfahrzeugs wird dabei über die Räder des Kraftfahrzeugs das wenigstens eine Getriebezahnrad und das damit kämmende Ritzel weiterhin angetrieben, nicht jedoch die Antriebswelle. Mittels des Ölführungskanalteils kann nun vorteilhaft auch in einer Entkopplungsstufe der Kupplungseinrichtung das auf der Antriebswelle befindliche Lager des rotierenden Ritzels mit Öl versorgt werden, ohne dass hierzu eine Rotation der Antriebswelle erforderlich ist.

Im Unterschied zu den aus dem Stand der Technik bekannten Lösungen, bei denen der Ölsammelbereich den Endbereich eines um eine Zahnradachse gekrümmten Halbbogen-Hohlkörpers bildet, umfasst bei der vorliegenden Erfindung der Ölsammelbereich ein erstes Sammelbecken, das oberhalb des Öl fördernden Getriebezahnrades angeordnet ist. Der in dem ersten Sammelbecken enthaltene Vorrat an Öl lässt den Ölsumpf am Grund des Getriebegehäuses im Betrieb absinken. Der Leitkanal ist als einfacher, umfangsseitig geschlossener Kanal ausgebildet, der sich von der Aufnahmeöffnung bis zu einer Auslassöffnung vorzugsweise geradlinig erstrecken kann. Der Öffnungsquerschnitt der Aufnahmeöffnung kann dem Öffnungsquerschnitt der Auslassöffnung entsprechen. Das der Aufnahmeöffnung des Leitkanals durch die Schaufelbewegung des sich drehenden Getriebezahnrades zugeführte Getriebeöl wandert in dem Leitkanal ohne auf Hindernisse zu treffen entgegen der Schwerkraft nach oben, bis es aus der Auslassöffnung austritt und sich in dem ersten Sammelbecken sammelt. Der Leitkanal mit der umlaufenden Kanalwand stellt einen in das Ölführungskanalteil integrierten Leitkanal dar. Vorteilhaft wird auch bei geringen Drehzahlen in dem Leitkanal Öl gefördert.

Das Öl wird nicht in dem Leitkanal gesammelt, sondern außerhalb des Leitkanals in dem ersten Sammelbecken, so dass auch bei Drehzahlschwankungen eine ausreichende Schmierung der Getriebelager möglich ist, da der im ersten Sammelbecken enthaltene Vorrat genutzt werden kann. Wenigstens ein Ablauf, vorzugsweise jedoch mehrere Abläufe können an dem ersten Sammelbecken vorhanden sein, um die Ölzuführung zu unterschiedlichen, tiefer gelegenen Lagern in dem Getriebe realisieren. Vorteilhaft kann im Vergleich zum Stand der Technik die Menge des im Betrieb durch den Leitkanal geförderten Öls unabhängiger von der aus dem Ölsammelbereich über einen Ablauf ablaufenden Ölmenge ausgestaltet werden. Der Leitkanal dient lediglich der Befüllung des ersten Sammelbeckens, während der Abfluss von Öl aus dem ersten Sammelbecken über die geometrische Ausgestaltung des Sammelbeckens und die geometrische Ausgestaltung des wenigstens einen Ablaufs eingestellt werden kann. Die Ölzuführung zu den Lagerstellen der Getriebeelemente kann daher vorteilhaft sowohl örtlich wie auch in Hinblick auf den Zeitablauf optimiert werden. Insbesondere bei Getrieben, in denen rotierende Getriebeelemente in Bezug auf die Schwerkraft in mehreren Ebenen übereinander angeordnet sind, gelingt so eine verbesserte Schmierung der Lagerstellen.

Da das erste Sammelbecken vorteilhaft als Zwischenspeicher genutzt wird, steht auch bei kurzen Deaktivierungszeiten einer das Getriebe antreibenden elektrischen Maschine eine schnellere Schmierung bei erneuter Aktivierung der elektrischen Maschine bereit. Bei längeren Standzeiten kann sich das erste Sammelbecken über eine kleine Ablauföffnung im ersten Beckenboden jedoch auch vollständig in Richtung Ölsumpf entleeren.

Vorteilhafte Ausführungsformen und Weiterbildungen der Erfindung werden durch die in den abhängigen Ansprüchen angegebenen Merkmale ermöglicht.

Vorteilhaft kann ein von der Aufnahmeöffnung abgewandtes Ende der Kanalwand des Leitkanals eine über den ersten Beckenboden des ersten Sammelbeckens vorstehende und die Auslassöffnung begrenzende, umlaufende Wandung derart ausbildet, dass aus der Auslassöffnung des Leitkanals austretendes Öl sich in Richtung der Schwerkraft ablaufend in dem ersten Sammelbecken sammelt. Über die umlaufende Wandung ablaufendes Öl kann somit vorteilhaft direkt in das erste Sammelbecken ablaufen und dieses befüllen.

Vorteilhaft kann der Leitkanal geradlinig ausgebildet sein und zumindest im Bereich des Getriebezahnrades tangential zu einer Stirnseite des Getriebezahnrades verlaufen, wobei die Aufnahmeöffnung in unmittelbarer Nähe zu der Stirnseite des Getriebezahnrades positioniert ist. In unmittelbarer Nähe zu der Stirnseite des Getriebezahnrades bedeutet in diesem Kontext, dass die Aufnahmeöffnung so nah an dem Getriebezahnrad gelagert ist, dass das Getriebeöl von der Stirnseite aus direkt der Aufnahmeöffnung zugeführt werden kann.

Die Aufnahmeöffnung kann als Fangmaul ausgebildet sein, wobei der umlaufende Rand der Aufnahmeöffnung entsprechend dem Tangentialwinkel des Leitkanals abgeschrägt verläuft, so dass eine möglichst starke Annäherung der Aufnahmeöffnung an die Stirnseite des Getriebezahnrades erreicht wird. Die Kontur des umlaufenden Randes kann dabei an den Krümmungsradius der Stirnseite des Getriebezahnrades angepasst sein. Das von dem Getriebezahnrad geförderte Öl, welches teilweise unter Einfluss der Zentrifugalkraft weggeschleudert wird, gelangt am Ort der Aufnahmeöffnung in den Leitkanal. Der Bewegungsimpuls des sich von dem Getriebezahnrad ablösenden Öls entspricht dabei weitgehend der Ölleitrichtung des Leitkanals, so dass das Öl vorzugweise ohne Hindernisse zur Auslassöffnung des Leitkanals gelangt. Das aus der Auslassöffnung des Leitkanals austretende Öl läuft in Richtung der Schwerkraft ab und sammelt sich in dem ersten Sammelbecken, welches dadurch befüllt wird. Das aus dem Sammelbecken ablaufende Öl gelangt in gewisser Hinsicht "passiv" (nämlich unter dem Einfluss der Schwerkraft) an die vorgesehenen Schmierstellen des Getriebes.

In einem Ausführungsbeispiel ist vorgesehen, dass die Antriebswelle als Hohlwelle mit einer axialen Bohrung ausgebildet ist. Wenn das Ritzel mit dem Getriebezahnrad kämmt, kann von der Ablauföffnung des ersten Ablaufs ablaufendes Öl der axialen Bohrung der Antriebswelle zugeführt werden und von dort beispielsweise über wenigstens eine Radialbohrung zu dem Lager des Ritzels gelangen. Das Lager des Ritzels kann beispielsweise insbesondere als Nagellager ausgebildet sein, dessen Ölschmierung zuverlässig darzustellen ist.

In diesem Zusammenhang ist es vorteilhaft, wenn das von der Ablauföffnung des ersten Ablaufs unter Einfluss der Schwerkraft ablaufende Öl in eine an einem ersten Gehäuseteil des Getriebegehäuses ausgebildete Kammer gelangt, in der eine Stauscheibe angeordnet ist, wobei an der Stauscheibe zentrisch ein Kanalabschnitt angeformt ist, wobei der Kanalabschnitt in die axiale Bohrung der Antriebswelle eingreift, wobei in der Kammer enthaltenes Öl über die Stauscheibe in den Kanalabschnitt abläuft und so in die axiale Bohrung der Antriebswelle gelangt. Das der Kammer zugeführte Öl benetzt die Stauscheibe und läuft an der Stauscheibe entlang in den Kanalabschnitt. Da dieser in die axiale Bohrung der Antriebswelle eingreift, ist durch die Stauscheibe vorteilhaft eine permanente Ölzufuhr in die axiale Bohrung auch bei stillstehender oder langsam rotierender Antriebswelle gewährleistet, so dass das Nagellager des auf der Antriebswelle rotierenden Ritzels problemlos geschmiert werden kann.

In einem Ausführungsbeispiel kann eine in dem Getriebegehäuse in wenigstens einem Lager gelagerte Rotorwelle einer elektrischen Maschine vorgesehen sein, wobei mittels der Rotorwelle die Antriebswelle angetrieben werden kann. Beispielsweise in dieses Fällen ist es vorteilhaft, wenn der Ölsammelbereich des Ölführungskanalteils ein zweites Sammelbecken umfasst, wobei das zweite Sammelbecken eine zweite Beckenwand und einen zweiten Beckenboden aufweist, wobei das zweite Sammelbecken über einen Verbindungskanal mit dem ersten Sammelbecken in Verbindung steht, wobei ein zweiter Ablauf in der vorbestimmten Einbaurichtung oberhalb des zweiten Beckenbodens von der zweiten Beckenwand des zweiten Sammelbeckens abragt und eine Ablauföffnung aufweist, durch die Öl in Richtung des Lagers der Rotorwelle geführt wird. Durch die geometrische Ausgestaltung und Lage des zweiten Sammelbeckens und des zweiten Ablaufs kann die Ölzufuhr für das Lager der Rotorwelle unabhängig von der Ölzufuhr zum Lager des Ritzels ausgestaltet werden.

Natürlich können auch weitere Sammelbecken an dem Ölführungskanalteil und/oder weitere Abläufe an dem ersten oder zweiten Sammelbecken vorgesehen werden, mit denen weitere Lager rotierender Getriebeelemente mit Öl geschmiert werden.

Vorteilhaft kann der Rand der umlaufenden Wandung auf einer dem ersten Sammelbecken zugewandten Seite einen Abstand von dem ersten Beckenboden aufweisen, welcher geringer ausgebildet ist als der Abstand des Randes der umlaufenden Wandung von dem zweiten Beckenboden auf einer dem zweiten Sammelbecken zugewandten Seite. Bei einer Rotation des Getriebezahnrades und einer Förderung von Öl durch den Leitkanal gelangt Öl zunächst in das erste Sammelbecken und füllt dieses zumindest teilweise, bevor das Öl über den Verbindungskanal in das zweite Sammelbecken gelangt. Dadurch wird ein zu früher Ablauf des Öls in Richtung des zweiten Ablaufs vermieden und sichergestellt, dass der erste Ablauf stets auch mit Öl versorgt ist. In gewisser Hinsicht erfolgt daher in diesem Ausführungsbeispiel der Ablauf des Öls über den ersten Ablauf und den zweiten Ablauf kaskadenartig, wobei zunächst das erste Sammelbecken befüllt wird, bis Öl über den ersten Ablauf aus dem Ölführungskanalteil abläuft und gleichzeitig, kurz zuvor oder auch kurze Zeit später das zugeführte Öl über den Verbindungskanal das zweite Sammelbecken zu füllen beginnt, so dass Öl in diesem Beispiel über den zweiten Ablauf erst abläuft, nachdem es bereits über den ersten Ablauf abläuft.

Weiterhin vorteilhaft kann das Getriebegehäuse ein erstes Gehäuseteil mit einem ersten Gehäusewandbereich und ein auf das erste Gehäuseteil aufgesetztes zweites Gehäuseteil mit einem zweiten Gehäusewandbereich aufweisen, wobei im Auflagebereich von erstem Gehäuseteil und zweitem Gehäuseteil ein dritter Gehäusewandbereich angelegt ist, wobei der erste Gehäusewandbereich, der zweite Gehäusewandbereich und der dritte Gehäusewandbereich ein von dem Ölführungskanalteil abgewandtes Ende des Getriebezahnrades in dem Ölsumpf an drei Seiten umschließen. Ohne weitere Blendenelemente oder Zusatzmaßnahmen wird dadurch vorteilhaft ein mit Öl aus dem Ölsumpf stets gefüllter Bereich gebildet, in dem das wenigstens eine Getriebezahnrad rotiert. Die Abstände zwischen den Gehäusewandbereichen und dem Getriebezahnrad sind mit einem Spaltmaß dimensioniert, dass eine zuverlässige Benetzung und Ölförderung durch das Getriebezahnrad ermöglicht. Dabei bilden der erste Gehäusewandbereich, der zweite Gehäusewandbereich, der dritte Gehäusewandbereich, das Getriebezahnrad und der Leitkanal ein Pumpensystem, durch welches bei einer Rotation des Getriebezahnrades Öl aus dem Ölsumpf durch den Leitkanal entgegen der Schwerkraft zur Auslassöffnung des Leitkanals transportiert wird.

Das Getriebezahnrad kann drehfest mit einem Differential des Getriebes gekoppelt sein, wobei eine erste Abtriebswelle und eine zweite Abtriebswelle mit dem Differential gekoppelt sind, wobei die erste Abtriebswelle und die zweite Abtriebswelle mit dem Differential drehend angetrieben werden. Das Getriebezahnrad kann beispielsweise als Stirnrad an einem Differentialkäfig des Differentials festgelegt sein. Da das Differential zusammen mit den übrigen Getriebeelementen im Getriebegehäuse verbaut werden kann, können die das Differential umgebenden Gehäuseteile vorteilhaft sehr leicht dazu genutzt werden, das von dem Ölführungskanalteil abgewandte Ende des Getriebezahnrades zu flankieren, um die oben beschrieben Wirkung eines Pumpensystems zu erreichen.

### Kurze Beschreibung der Zeichnungen

Nachfolgend werden mögliche Ausführungsformen der Erfindung unter Bezugnahme auf die beiliegende Zeichnung erläutert. In der Zeichnung zeigen:
- Fig. 1: einen Querschnitt durch ein Getriebe eines Kraftfahrzeuges, welches von einer elektrischen Maschine angetrieben wird,
- Fig. 2: eine perspektivische Ansicht eines Ausführungsbeispiels eines Ölführungskanalteils zum Einsatz in einem Getriebe, wie es in Fig. 1 dargestellt ist,
- Fig. 3: eine Draufsicht auf das Ölführungskanalteil aus Fig. 2,
- Fig. 4: eine weitere perspektivische Ansicht des Ölführungskanalteils aus Fig. 2 und Fig. 3,
- Fig. 5: eine vergrößerte Detailansicht aus Fig. 6 für ein erfindungsgemäßes Getriebe mit dem Ölführungskanalteil aus den Figuren 1 bis 4,
- Fig. 6: einen Querschnitt durch ein erfindungsgemäßes Getriebe mit dem Ölführungskanalteil aus den Figuren 1 bis 4,
- Fig. 7: eine Seitenansicht des Getriebes aus Fig. 6 mit dem Ölführungskanalteil,
- Fig. 8: eine perspektivische Draufsicht auf ein Getriebe mit dem Ölführungskanalteil,
- Fig. 9: ein Detail des Getriebegehäuses aus Fig. 8 mit einer Stauscheibe, wie sie in Verbindung mit der Ölführungskanalteil verwandt werden kann.

### Ausführungsformen der Erfindung

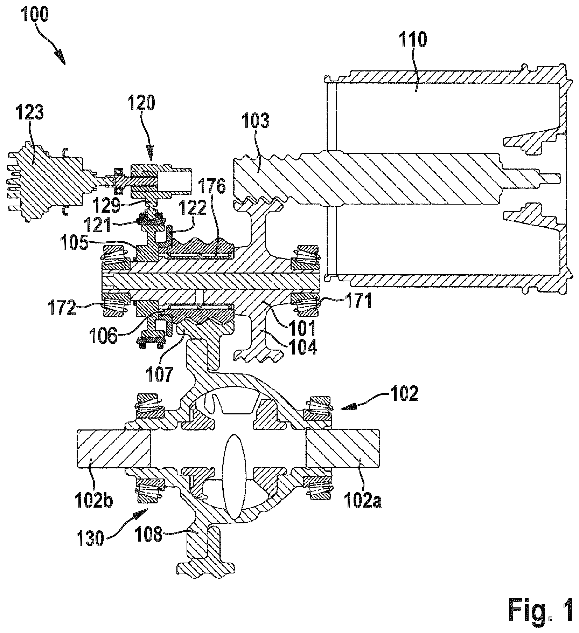

Fig. 1 zeigt eine Antriebsvorrichtung für ein Kraftfahrzeug, die ein Getriebe 100 umfasst. Das Getriebe 100 ist eingangsseitig mit einer elektrischen Maschine 110 verbunden, die eine Rotorwelle 103 aufweist. Die Rotorwelle 103 kämmt mit einem Zahnrad 104, das drehfest mit einer Antriebswelle 101 des Getriebes gekoppelt ist. Die Antriebswelle 101 ist über ihren Außenumfang an zwei axial beabstandeten Lagerstellen 171 und 172 in einem (in Fig. 1 nicht dargestellten) Getriebegehäuse drehbar gelagert.

Weiterhin umfasst das Getriebe 100 eine Kupplungseinrichtung 120, die beispielsweise mittels eine vorzugsweise elektrisch betätigbaren Drehstellers 123 ansteuerbar ist. Der elektrische Aktuator 123 kann beispielsweise über einen Spindelantrieb und eine Schaltgabel 129 auf ein Kupplungselement 121 einwirken, das axial verschiebbar auf einer Führungsnabe 105 gelagert ist. Das Kupplungselement 121 ist beispielsweise ringförmig ausgebildet und kann sich relativ zur Schaltgabel 129 drehen. Das Kupplungselement 121 kann eine Innenverzahnung aufweisen, die in eine Außenverzahnung der Führungsnabe 105 eingreift, so dass das Kupplungselement 121 auf der Führungsnahe 105 parallel zur Achse der Antriebswelle 101 verschiebbar ist. Die Führungsnabe 105 und das damit in Eingriff stehende Kupplungselement 121 ist drehfest auf der Antriebswelle 101 gelagert. Weiterhin ist ein Koppelelement 122 vorgesehen, das drehfest mit einem Ritzel 106 gekoppelt ist. Das Ritzel 106 ist beispielsweise mit einem als Nagellager ausgebildeten Lager 176 auf der Antriebswelle 101 drehbar gelagert. Das Koppelelement 122 kann eine Außenverzahnung aufweisen. Bei einer Betätigung des Drehstellers 123 verschiebt der Spindelantrieb über die Schaltgabel das Kupplungselement 121 in der axialen Richtung, bis die Innenverzahnung des Kupplungselementes 121 in die Außenverzahnung des Koppelelementes 122 eingreift, wodurch das Kupplungselement 121 drehfest mit dem Koppelelement 122 gekoppelt wird. Durch die Kopplung rotiert das Zahnrad 104, die Antriebswelle 101, die Führungsnabe 105, das Kupplungselement 121, das Koppelelement 122 und das Ritzel 106 als Block um die Achse der Antriebswelle 101. Bei einer Entkopplung wird mittels des Drehstellers 123 das Kupplungselement 121 von dem Koppelelement 122 in Fig. 1 nach links abgezogen, wodurch die Kopplung zwischen dem Ritzel 106 und der Antriebswelle 101 aufgehoben wird. Das Ritzel 106 kann nun um die Antriebswelle 101 rotieren.

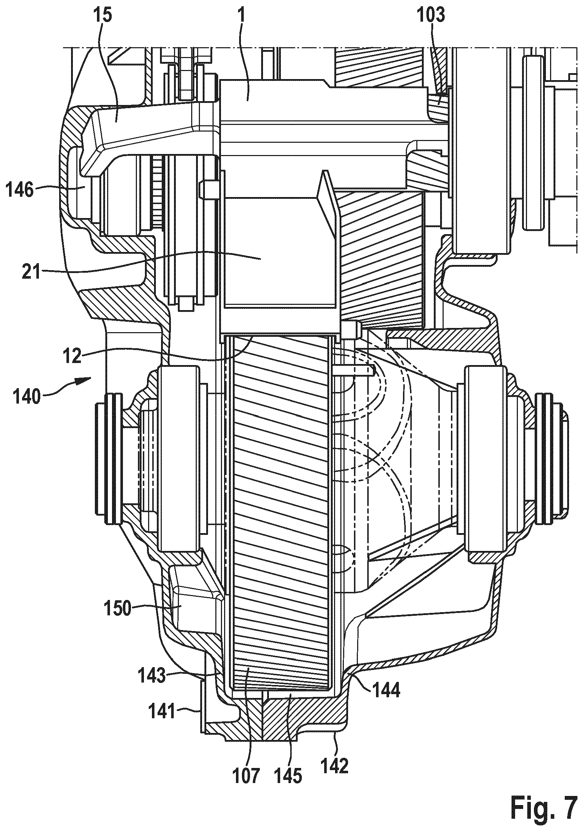

Das Ritzel 106 kämmt mit einem Getriebezahnrad 107. Das Getriebezahnrad 107 ist in dem dargestellten Ausführungsbeispiel drehfest mit einem Differential 130 gekoppelt ist. Das Differential 130 weist eine Abtriebswelle 102 in Form einer ersten Abtriebswelle 102a und einer zweiten Abtriebswelle 102b auf, die mit dem Differential 130 drehend angetrieben werden können. Das Getriebezahnrad 107 ist mit dem Differentialkäfig 108 des Differentials 130 fest verbunden. Wie in Fig. 7 dargestellt ist, kann das Differential 130 in das Getriebegehäuse 140 des Getriebes 100 integriert sein.

Wie bereits beschrieben, wird in dem entkoppelten Zustand mittels der Kupplungseinrichtung 120 die Kopplung zwischen dem Ritzel 106 und der Antriebswelle 101 aufgehoben. Wird nun beispielsweise in einem Fahrzustand eines Kraftfahrzeuges zusätzlich die elektrische Maschine abgeschaltet, so wird die Rotorwelle 103 und die Antriebswelle 101 nicht mehr angetrieben. Die Räder des noch rollenden Kraftfahrzeugs treiben nun über die Ausgangswelle 102 das Getriebezahnrad 107 an, welche mit dem Ritzel 106 kämmt, so dass das Ritzel 106 um die Antriebswelle 101 rotiert. Auch in diesem Zustand muss gewährleistet sein, dass beispielsweise das über dem Ölsumpf des Getriebes 100 angeordnete Lager 176 des Ritzels 106 ausreichend mit Öl versorgt wird.

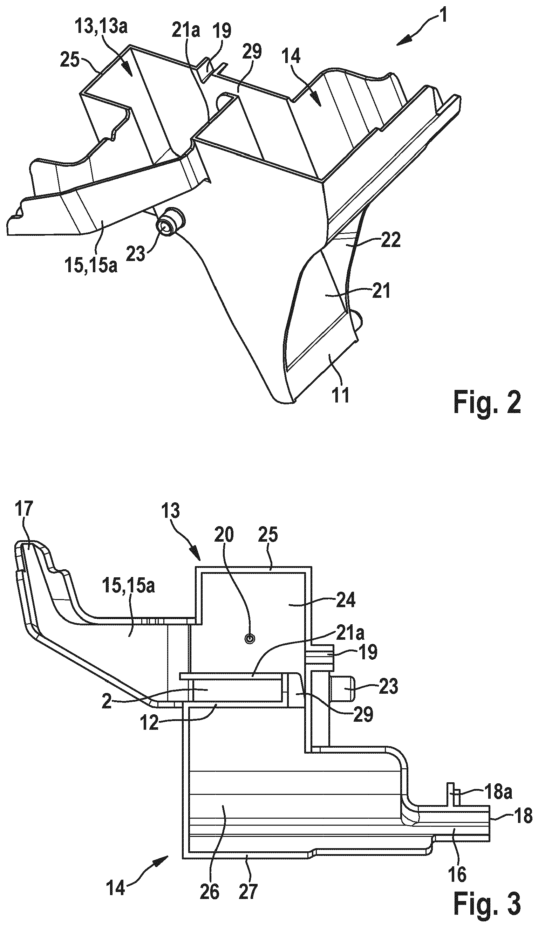

Fig. 2, Fig. 3 und Fig. 4 zeigen ein Ausführungsbeispiel eines Ölführungskanalteil 1, das beispielsweise in dem anhand der Fig. 1 dargestellten Getriebe 100 verbaut werden kann. Das Ölführungskanalteil 1 kann, wie hier gezeigt, als Einlegeteil ausgebildet sein, welches beim Zusammenbau des Getriebes 100 in das Getriebe 100 eingesetzt wird. Das Ölführungskanalteil 1 kann aus Kunststoff oder Metall oder einem Kunststoff-Metall-Verbund gefertigt werden und einteilig oder mehrteilig aufgebaut sein. Insbesondere ist es möglich, das Ölführungskanalteil aus zwei oder mehr Schalenteilen zusammenzusetzen, welche über Rastverbindungen oder Clipsverbindungen mechanisch miteinander verbunden werden.

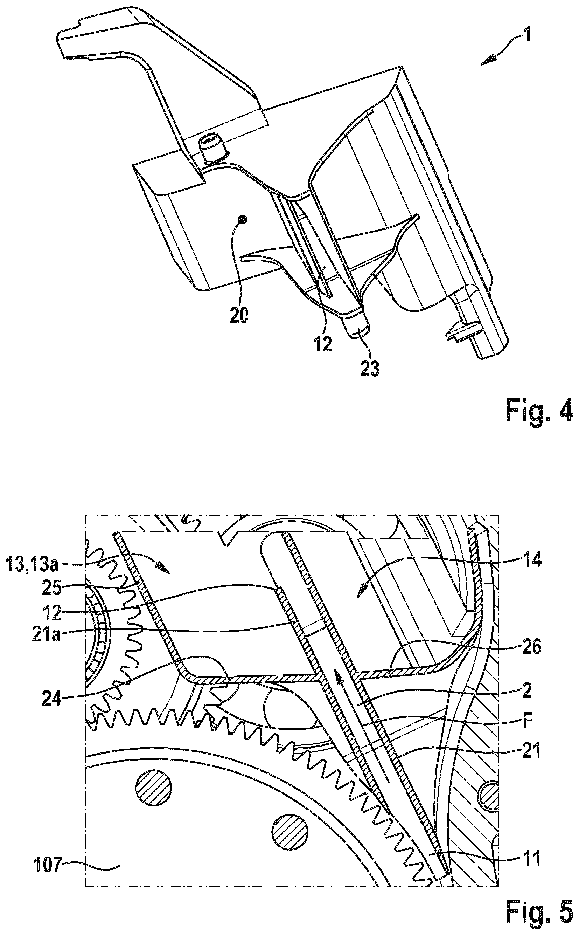

Das Ölführungskanalteil 1 weist einen Leitkanal 2 mit einer Aufnahmeöffnung 11 und mit einer Auslassöffnung 12 auf, wobei der Leitkanal 2 von der Aufnahmeöffnung 11 bis zur Auslassöffnung 12 eine Ölleitrichtung F (dargestellt in Fig. 5) und eine senkrecht zur Ölleitrichtung F umlaufend geschlossene Kanalwand 21 aufweist. Das Ölführungskanalteil 1 weist weiterhin einen Ölsammelbereich 13a zur Ansammlung von durch den Leitkanal 2 gefördertem Öl und einen Ablauf 15a für Öl aus dem Ölsammelbereich 13a auf.

Der Ölsammelbereich 13a umfasst ein erstes Sammelbecken 13. Das erste Sammelbecken 13 weist eine erste Beckenwand 25 und einen ersten Beckenboden 24 auf. Ein von der Aufnahmeöffnung 11 des Leitkanals 2 abgewandtes Ende der Kanalwand 21 bildet eine über den ersten Beckenboden 24 des ersten Sammelbeckens 13 vorstehende und die Auslassöffnung 12 begrenzende, umlaufende Wandung 21a, wie in Fig. 2, Fig. 3 und insbesondere in Fig. 5 gut zu erkennen ist. Das Ölführungskanalteil 1 weist weiterhin einen ersten Ablauf 15 auf, der oberhalb des ersten Beckenbodens 24 von der ersten Beckenwand 25 abragt und eine Ablauföffnung 17 aufweist. Der erste Ablauf 15 ist als abgewinkelte Rinne ausgebildet. Zusätzlich kann am oberen Rand der ersten Beckenwand 25 ein weiterer Ablauf 19 angeformt sein, der als Überlauf fungiert. Das erste Sammelbecken 13 kann eine als Bohrung ausgebildete kleine Ablauföffnung 20 im ersten Beckenboden 24 aufweisen, über die sich das erste Sammelbecken 13 bei längeren Standzeiten entleeren kann. Der Durchmesser der Ablauföffnung 20 ist so klein ausgebildet, dass die über die Ablauföffnung 20 ablaufende Ölmenge im Betriebe deutlich kleiner ist, als die für den Leitkanal 2 zugeführte Ölmenge.

Wie weiterhin in Fig. 2, Fig. 3 und Fig. 4 dargestellt ist, umfasst der Ölsammelbereich 13a des Ölführungskanalteils 1 ein zweites Sammelbecken 14, wobei das zweite Sammelbecken 14 eine zweite Beckenwand 27 und einen zweiten Beckenboden 26 aufweist. Wie in Fig. 3 erkennbar ist, steht das zweite Sammelbecken 14 über einen Verbindungskanal 29 (Fig. 3) mit dem ersten Sammelbecken 13 in Verbindung. Ein zweiter Ablauf 16 ragt oberhalb des zweiten Beckenbodens 26 von der zweiten Beckenwand 27 des zweiten Sammelbeckens 14 ab und weist eine Ablauföffnung 18 auf. Auch der zweite Ablauf 16 kann rinnenartig ausgebildet sein. Zusätzlich kann der zweite Ablauf 16 beispielsweise eine weitere Ablauföffnung 18a aufweisen, die von dem Ablauf 16 abgewinkelt ist.

Der Rand der umlaufenden Wandung 21a weist vorzugsweise auf einer dem ersten Sammelbecken 13 zugewandten Seite einen Abstand von dem ersten Beckenboden 24 auf, der geringer ausgebildet ist als der Abstand des Randes der umlaufenden Wandung 21a von dem zweiten Beckenboden 26 auf einer dem zweiten Sammelbecken 14 zugewandten Seite.

Das in den Figuren 2 bis 4 dargestellte Ölführungskanalteil 1 ist dazu ausgelegt, in einem vorbestimmten Einbauzustand, der eine Ausrichtung des Ölführungskanalteils relativ zur Schwerkraft G definiert, in dem Getriebegehäuse 140 des Getriebes 100 angeordnet zu werden. Ohne darauf beschränkt zu sein, ist das Ölführungskanalteil 1 vorzugsweise dazu bestimmt, in das in der Fig. 1 dargestellte Getriebe 100 eingesetzt zu werden. Dazu weist das Ölführungskanalteil 1 an den Seiten von dem Ölführungskanalteil 1 abstehende Haltenocken 23 auf, mit denen das Ölführungskanalteil 1 in einem Getriebegehäuse 140 eines Getriebes 100 in einer vorbestimmten Ausrichtung relativ zur Normallage des Getriebes 100 verbaut und verankert werden kann. Wie in Fig. 2 weiterhin zu erkennen ist, kann das Ölführungskanalteil 1 zur Stabilitätserhöhung mit Verstärkungsrippen 22 versehen sein.

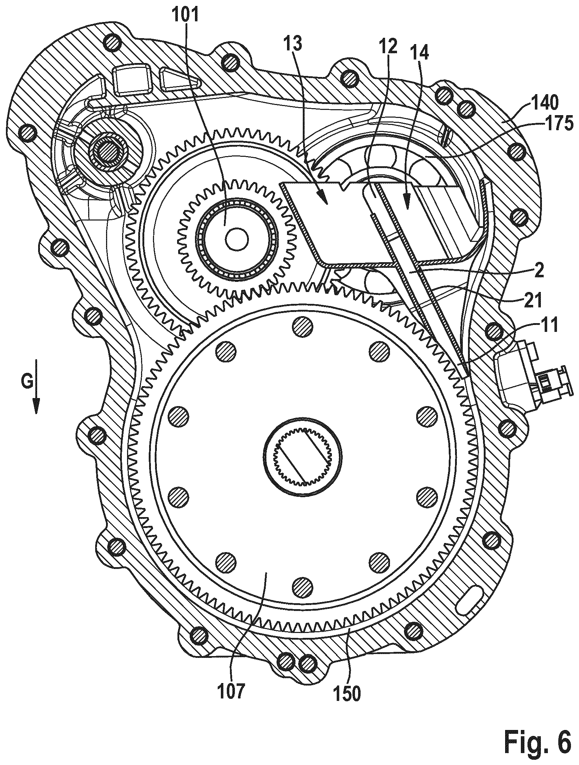

Fig. 6 und die vergrößerte Detailansicht der Fig. 5 zeigen ein Getriebe 100, dessen grundsätzlicher Aufbau dem in der Fig. 1 dargestellten Getriebe entspricht, mit dem darin verbauten Ölführungskanalteil 1 aus Fig. 2 bis 4. Es ist zu erkennen, dass die Aufnahmeöffnung 11 des Leitkanals 2 an der Stirnseite des Getriebezahnrades 107 und in unmittelbarer Nähe zur der Stirnseite des Getriebezahnrades 107 positioniert ist, während der erste Beckenboden 24 des ersten Sammelbeckens 13 oberhalb des Getriebezahnrades 107 positioniert ist.

Die Ölleitrichtung F verläuft daher von der Aufnahmeöffnung 11 bis zur Auslassöffnung 12 entgegen der Schwerkraft G, deren Ausrichtung für die Normallage des Getriebes 100 in Fig. 6 dargestellt ist.

Wie in den Figuren 5 und 6 dargestellt ist, ist der Leitkanal 2 vorzugsweise geradlinig ausgebildet und verläuft zumindest im Bereich des Getriebezahnrades 107 vorzugsweise tangential zu einer Stirnseite des Getriebezahnrades 107. Die Aufnahmeöffnung 11 kann als Fangmaul ausgebildet sein, wobei der umlaufende Rand der Aufnahmeöffnung 11 entsprechend dem durch die Richtung von Schwerkraft und Förderrichtung F gebildeten Winkel abgeschrägt ausgestaltet sein kann, so dass eine möglichst starke Annäherung der Aufnahmeöffnung 11 an die Stirnseite des Getriebezahnrades 107 erreicht werden kann. Die Kontur des umlaufenden Randes kann dabei wie dargestellt an den Krümmungsradius der Stirnseite des Getriebezahnrades 107 angepasst sein.

Das Getriebezahnrad 107 ist teilweise in einem Ölsumpf 150 angeordnet, wie noch später anhand der Fig. 7 erläutert wird. Das Getriebezahnrad 107 nimmt Öl aus dem Ölsumpf 150 auf und transportiert dieses in die Aufnahmeöffnung 11 des Leitkanals 2. Der Bewegungsimpuls des Öls drückt dieses in dem Leitkanal 2 in der Ölleitrichtung F bis zur Auslassöffnung 12.

Wie am besten in Fig. 5 zu erkennen ist, läuft das aus der Auslassöffnung 12 des Leitkanals 2 austretende Öl über die umlaufende Wandung 21a in Richtung der Schwerkraft G und damit in Richtung des ersten Sammelbeckens 13 ab, wo es sich ansammelt. Da der Rand der umlaufenden Wandung 21a auf der dem ersten Sammelbecken 13 zugewandten Seite einen Abstand von dem ersten Beckenboden 24 aufweist, der geringer ausgebildet ist als der Abstand des Randes der umlaufenden Wandung 21a von dem zweiten Beckenboden 26 auf einer dem zweiten Sammelbecken 14 zugewandten Seite, fließt das Öl zunächst über den Rand der umlaufenden Wandung 21a an der dem ersten Sammelbecken 12 zugewandten Seite, so dass dieses zunächst befüllt wird. Sobald das Öl den Verbindungskanal 29 erreicht, füllt sich über diesen auch das zweite Sammelbecken 14 mit Öl. Der in dem ersten Sammelbecken 13 und dem zweiten Sammelbecken 14 ansteigende Ölpegel erreicht nach kurzer Zeit den ersten Ablauf 15 und den zweiten Ablauf 16 und fließt unter dem Einfluss der Schwerkraft G über die erste Ablauföffnung 17 und die zweite Ablauföffnung 18 und dritte Ablauföffnung 18a aus dem Ölführungskanalteil 1 ab.

Fig. 7 zeigt eine Seitenansicht auf das Getriebe 100 und das darin verbaute Ölführungskanalteil 1. Die Richtung der Schwerkraft G ist in der Figurenebene der Fig. 7 senkrecht von oben nach unten gerichtet. Es ist zu erkennen, dass das Getriebegehäuse 140 ein erstes Gehäuseteil 141 und ein zweites Gehäuseteil 142 aufweist. Es können aber auch weitere Gehäuseteile vorgesehen sein. Das erste Gehäuseteil 141 und das zweite Gehäuseteil 142 können beispielsweise Gehäusehalbschalen bilden, welche aufeinander aufgesetzt werden und miteinander verbunden werden können. Im unteren Bereich des Getriebegehäuses 140 ist das erste Gehäuseteil 141 mit einem ersten Gehäusewandbereich 143 und das zweite Gehäuseteil 142 mit einem zweiten Gehäusewandbereich 144 versehen. Der erste Gehäusewandbereich 143 und der zweite Gehäusewandbereich 144 können durch eine entsprechende Ausformung von Gussteilen leicht hergestellt sein.

Im Auflagebereich von erstem Gehäuseteil 141 und zweitem Gehäuseteil 142 ist ein dritter Gehäusewandbereich 145 angelegt. Der dritte Gehäusewandbereich 145 wird durch die Innenseite der Kragenflächen eines Kragens gebildet, welcher im unteren Bereich des Getriebegehäuses 140 jeweils an dem ersten Gehäuseteil 141 und dem zweiten Gehäuseteil 142 ausgebildet ist. Der erste Gehäusewandbereich 143, der zweite Gehäusewandbereich 144 und der dritte Gehäusewandbereich 145 umschließen das von dem Ölführungskanalteil 1 abgewandtes Ende des Getriebezahnrades 107 in dem Ölsumpf 150 an drei Seiten. Zwischen den Außenflächen des Getriebezahnrads 107 den Gehäusewandbereichen verbleibt ein schmaler Spalt, welcher durch Getriebeöl aus dem Ölsumpf 150, dessen Pegel sich direkt über den Gehäusewandbereichen befindet, stets gefüllt ist. Durch den ersten Gehäusewandbereich 143, den zweiten Gehäusewandbereich 144, den dritten Gehäusewandbereich 145, das Getriebezahnrad 107 und den Leitkanal 2 wird ein Pumpensystem gebildet, durch welches bei einer Rotation des Getriebezahnrades 107 Öl aus dem Ölsumpf 150 in den Leitkanal 2 transportiert wird.

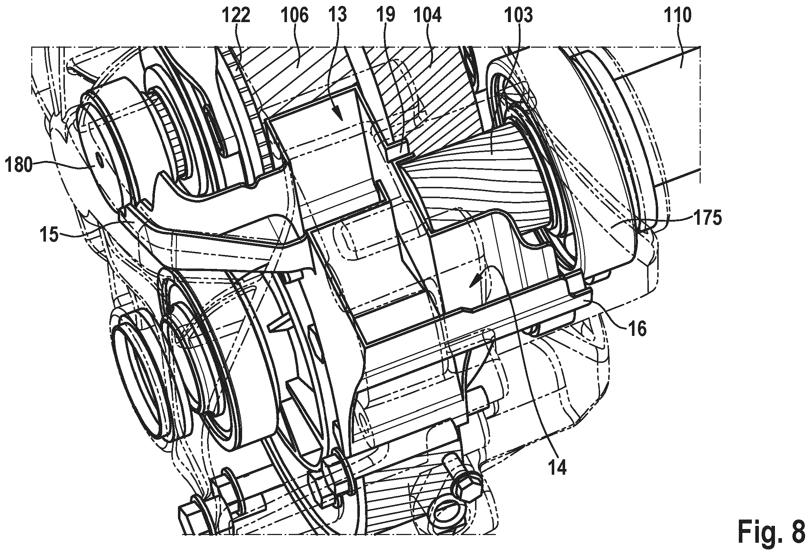

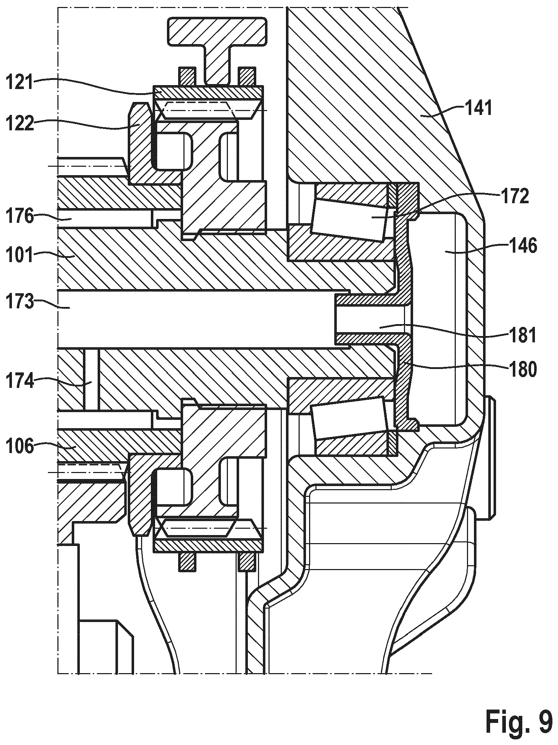

Fig. 8 verdeutlicht, wie das über den ersten Ablauf 15 und den zweiten Ablauf 18 aus dem Ölführungskanalteil 1 ablaufende Öl in dem Getriebe 100 an Lager herangeführt werden kann. In Fig. 8 ist eine an der Antriebswelle 101 gelagerte Stauscheibe 180 erkennbar. Eine vergrößerte, spiegelbildlich verdrehte Darstellung der Stauscheibe 180 findet sich in Fig. 9. Wie in Fig. 8 und Fig. 9 zu erkennen ist, kann das von der Ablauföffnung 17 des ersten Ablaufs 15 ablaufende Öl in eine an dem ersten Gehäuseteil 141 des Getriebegehäuses 140 ausgebildete Kammer 146 gelangen, in welcher die Stauscheibe 180 angeordnet ist. Die Stauscheibe 180 ist mit einem kreisringförmigen Grundkörper aus beispielsweise Metall ausgebildet, der mit seinem Außenrand zwischen dem ersten Gehäuseteil 141 und einem Lager 172 der Antriebswelle 101 gelagert ist. Wie in Fig. 9 zu erkennen ist, ist im Zentrum der Stauscheide 180 ein zylindrischer Kanalabschnitt 181 angeformt, der in eine axiale Bohrung 173 der als Hohlwelle ausgebildeten Antriebswelle 101 eingreift. Das über die Ablauföffnung 17 der Kammer 146 zugeführte Öl läuft über die Stauscheibe 180 in den Kanalabschnitt 181 ab und gelangt so in die axiale Bohrung 173 der Antriebswelle 101. Von dort gelangt das Öl über wenigstens eine Radialbohrung 174 in der Antriebswelle direkt an das Lager 176 des Ritzels 106.

Wie weiterhin in Fig. 8 zu erkennen ist, kann der Ablauf 16 dazu bestimmt sein, Öl in Richtung eines Lagers 175 der Rotorwelle 103 abzuführen. Das Lager 175 kann beispielsweise als Kugellager ausgebildet sein. Die Ablauföffnung 18 des zweiten Ablaufs 16 im Bereich des Lages 175 ist auch in Fig. 6 gut zu erkennen.

Mittels des Ölführungskanalteils 1 werden folglich völlig unterschiedliche Lager innerhalb des Getriebes 100 mit Schmieröl versorgt. In dem dargestellten Ausführungsbeispiel eines Getriebes mit einer Kupplungseinrichtung (sogenanntes Disconnect-Getriebe) geschieht dies vorteilhaft unabhängig vom Kupplungszustand der Kupplungseinrichtung, so dass in unterschiedlichen Kupplungszuständen immer eine ausreichende Schmierung der Lager vorliegt.

Das Getriebe mit dem Ölführungskanalteil 1 kann jedoch grundsätzlich auch anders aufgebaut sein. Es versteht sich, dass mittels des wenigstens eines ersten Sammelbeckens und der davon abzweigenden Abläufe und/oder Verbindungskanäle zu weiteren Sammelbecken eine optimale Zuführung von Schmieröl an die Lager rotierender Getriebeelemente auch für andersartig aufgebaute Getriebe optimal angepasst werden kann.

## Patentansprüche

1. Getriebe (100), insbesondere Kraftfahrzeuggetriebe, mit einem Getriebegehäuse (140) und wenigstens einem in dem Getriebegehäuse (140) angeordneten Getriebezahnrad (107), wobei das Getriebezahnrad (107) wenigstens teilweise in einem Ölsumpf (150) des Getriebes (100) angeordnet ist, wobei das Getriebe (100) ein Ölführungskanalteil (1) aufweist, wobei das Ölführungskanalteil (1) einen Leitkanal (2) mit einer Aufnahmeöffnung (11) und mit einer Auslassöffnung (12) aufweist, wobei der Leitkanal (2) von der Aufnahmeöffnung (11) bis zur Auslassöffnung (12) eine Ölleitrichtung (F) und eine senkrecht zur Ölleitrichtung (F) umlaufend geschlossene Kanalwand (21) aufweist, wobei das Ölführungskanalteil (1) weiterhin wenigstens einen Ölsammelbereich (13a) zur Ansammlung von durch den Leitkanal (2) geleitetem Öl aufweist, wobei das Ölführungskanalteil (1) wenigstens einen Ablauf (15a) für Öl aus dem wenigstens einen Ölsammelbereich (13a) aufweist, wobei das Ölführungskanalteil (1) in dem Getriebegehäuse (100) derart angeordnet ist, dass im Betrieb durch das Getriebezahnrad (107) aus dem Ölsumpf (150) aufgeworfenes Öl in die Aufnahmeöffnung (11) und entlang der Ölleitrichtung (F) des Leitkanals (2) zur Auslassöffnung (12) gelangt, wobei der wenigstens eine Ölsammelbereich (13a) ein erstes Sammelbecken (13) umfasst, wobei das erste Sammelbecken (13) eine erste Beckenwand (25) und einen ersten Beckenboden (24) aufweist, wobei das Ölführungskanalteil (1) in einem vorbestimmten Einbauzustand, der eine Ausrichtung des Ölführungskanalteils (1) in dem Getriebegehäuse (140) relativ zur Schwerkraft (G) definiert, in dem Getriebegehäuse (140) derart angeordnet ist, dass die Aufnahmeöffnung (11) an der Stirnseite des wenigstens teilweise in dem Ölsumpf (150) angeordneten Getriebezahnrades (107) und der erste Beckenboden (24) oberhalb des Getriebezahnrades (107) positioniert ist und die Ölleitrichtung (F) von der Aufnahmeöffnung (11) bis zur Auslassöffnung (12) entgegen der Schwerkraft (G) verläuft, **dadurch gekennzeichnet, dass** das Getriebe eine Antriebswelle (101) und eine Ausgangswelle (102) aufweist, wobei mittels des Getriebezahnrades (107) die Ausgangswelle (102) antreibbar ist, wobei ein Koppelelement (122) mit dem Getriebezahnrad (107) derart gekoppelt ist, dass das Getriebezahnrad (107) mittels des Koppelelements (122) angetrieben werden kann, wobei in dem Getriebe eine Kupplungseinrichtung (120) mit einem Kupplungselement (121) vorgesehen ist, wobei das Kupplungselement (121) drehfest mit der Antriebswelle (101) gekoppelt ist, wobei mittels der Kupplungseinrichtung (120) das Kupplungselement (121) drehfest mit dem Koppelelement (122) gekoppelt und von diesem abgekoppelt werden kann und wobei das Ölführungskanalteil (1) einen ersten Ablauf (15) aufweist, der oberhalb des ersten Beckenbodens (24) von der ersten Beckenwand (25) abragt und eine Ablauföffnung (17) aufweist, durch die ablaufendes Öl zu einem Lager (176) eines auf der Antriebswelle (101) drehbar gelagerten mit dem Koppelelement (122) drehfest gekoppelten Ritzels (106) geführt wird.

2. Getriebe (100) nach Anspruch 1, **dadurch gekennzeichnet, dass** ein von der Aufnahmeöffnung (11) abgewandtes Ende der Kanalwand (21) des Leitkanals (2) eine über den ersten Beckenboden (24) des ersten Sammelbeckens (13) vorstehende und die Auslassöffnung (12) begrenzende, umlaufende Wandung (21a) derart ausbildet, dass aus der Auslassöffnung (12) des Leitkanals (2) austretendes Öl sich in Richtung der Schwerkraft (G) ablaufend in dem ersten Sammelbecken (13) sammelt.

3. Getriebe (100) nach einem der vorstehenden Ansprüche, **dadurch gekennzeichnet, dass** der Leitkanal (2) geradlinig ausgebildet ist und zumindest im Bereich des Getriebezahnrades (107) tangential zu einer Stirnseite des Getriebezahnrades (107) verläuft und die Aufnahmeöffnung (11) in unmittelbarer Nähe der Stirnseite des Getriebezahnrades (107) positioniert ist.

4. Getriebe (100) nach Anspruch 1, **dadurch gekennzeichnet, dass** die Antriebswelle (101) als Hohlwelle mit einer axialen Bohrung (173) ausgebildet ist, wobei das Ritzel (106) mit dem Getriebezahnrad (107) kämmt, wobei von der Ablauföffnung (17) des ersten Ablaufs (15) ablaufendes Öl in die axiale Bohrung (173) der Antriebswelle (101) und von dort über wenigstens eine Radialbohrung (174) zu dem Lager (176) gelangt, wobei das Lager (176) insbesondere als Nagellager ausgebildet ist.

5. Getriebe (100) nach Anspruch 4, **dadurch gekennzeichnet, dass** das von der Ablauföffnung (17) des ersten Ablaufs (15) ablaufende Öl in eine an einem ersten Gehäuseteil (141) des Getriebegehäuses (140) ausgebildete Kammer (146) gelangt, in der eine Stauscheibe (180) angeordnet ist, wobei an der Stauscheibe (180) zentrisch ein Kanalabschnitt (181) angeformt ist, wobei der Kanalabschnitt (181) in die axiale Bohrung (173) der Antriebswelle (101) eingreift, wobei in der Kammer (146) enthaltenes Öl über die Stauscheibe (180) in den Kanalabschnitt (181) abläuft und so in die axiale Bohrung (173) der Antriebswelle (101) gelangt.

6. Getriebe (100) nach einem der vorstehenden Ansprüche, **dadurch gekennzeichnet, dass** eine in dem Getriebegehäuse in wenigstens einem Lager (175) gelagerte Rotorwelle (103) einer elektrischen Maschine (110) vorgesehen ist, wobei mittels der Rotorwelle (103) die Antriebswelle (101) angetrieben werden kann, und dass der Ölsammelbereich (13a) des Ölführungskanalteils (1) ein zweites Sammelbecken (14) umfasst, wobei das zweite Sammelbecken (14) eine zweite Beckenwand (27) und einen zweiten Beckenboden (26) aufweist, wobei das zweite Sammelbecken (14) über einen Verbindungskanal (29) mit dem ersten Sammelbecken (13) in Verbindung steht, wobei ein zweiter Ablauf (16) in der vorbestimmten Einbaurichtung oberhalb des zweiten Beckenbodens (26) von der zweiten Beckenwand (27) des zweiten Sammelbeckens (14) abragt und eine Ablauföffnung (18) aufweist, durch die Öl in Richtung des Lagers (175) der Rotorwelle (103) geführt wird.

7. Getriebe (100) nach Anspruch 6, **dadurch gekennzeichnet, dass** der Rand der umlaufenden Wandung (21a) auf einer dem ersten Sammelbecken (13) zugewandten Seite einen Abstand von dem ersten Beckenboden (24) aufweist, welcher geringer ausgebildet ist als der Abstand des Randes der umlaufenden Wandung (21a) von dem zweiten Beckenboden (26) auf einer dem zweiten Sammelbecken (14) zugewandten Seite, und dass bei einer Rotation des Getriebezahnrades (107) Öl zunächst in das erste Sammelbecken (13) gelangt, bevor Öl über den Verbindungskanal (29) in das zweite Sammelbecken (14) gelangt.

8. Getriebe (100) nach einem der vorstehenden Ansprüche, **dadurch gekennzeichnet, dass** das Getriebegehäuse (140) ein erstes Gehäuseteil (141) mit einem ersten Gehäusewandbereich (143) und ein auf das erste Gehäuseteil (141) aufgesetztes zweites Gehäuseteil (142) mit einem zweiten Gehäusewandbereich (144) aufweist, wobei im Auflagebereich von erstem Gehäuseteil (141) und zweitem Gehäuseteil (142) ein dritter Gehäusewandbereich (145) angelegt ist, wobei der erste Gehäusewandbereich (143), der zweite Gehäusewandbereich (144) und der dritte Gehäusewandbereich (145) ein von dem Ölführungskanalteil (1) abgewandtes Ende des Getriebezahnrades (107) in dem Ölsumpf (150) an drei Seiten umschließen.

9. Getriebe nach Anspruch 8, **dadurch gekennzeichnet, dass** durch den ersten Gehäusewandbereich (143), den zweiten Gehäusewandbereich (144), den dritten Gehäusewandbereich (145), das Getriebezahnrad (107) und den Leitkanal (2) ein Pumpensystem gebildet ist, durch welches bei einer Rotation des Getriebezahnrades (107) Öl aus dem Ölsumpf (150) durch den Leitkanal (2) entgegen der Schwerkraft (G) zur Auslassöffnung (12) des Leitkanals (2) transportiert wird.

10. Getriebe (100) nach einem der vorstehenden Ansprüche **dadurch gekennzeichnet, dass** das Getriebezahnrad (107) drehfest mit einem Differential (130) des Getriebes (100) gekoppelt ist, wobei eine erste Abtriebswelle (102a) und eine zweite Abtriebswelle (102b) mit dem Differential (130) gekoppelt ist, wobei die erste Abtriebswelle (102a) und die zweite Abtriebswelle (102b) mit dem Differential (103) drehend angetrieben werden.

## Claims

1. Transmission (100), in particular motor vehicle transmission, having a transmission housing (140) and having at least one gearwheel (107) arranged in the transmission housing (140), wherein the gearwheel (107) is arranged at least partially in an oil sump (150) of the transmission (100), wherein the transmission (100) has an oil guide channel part (1), wherein the oil guide channel part (1) has a conducting channel (2) with a receiving opening (11) and with an outlet opening (12), wherein the conducting channel (2) has from the receiving opening (11) to the outlet opening (12) an oil conducting direction (F) and a channel wall (21) which is peripherally closed perpendicular to the oil conducting direction (F), wherein the oil guide channel part (1) further has at least one oil collecting region (13a) for collecting oil conducted through the conducting channel (2), wherein the oil guide channel part (1) has at least one outflow (15a) for oil out of the at least one oil collecting region (13a), wherein the oil guide channel part (1) is arranged in the transmission housing (100) in such a way that oil discharged from the oil sump (150) by the gearwheel (107) during operation passes into the receiving opening (11) and along the oil conducting direction (F) of the conducting channel (2) to the outlet opening (12), wherein the at least one oil collecting region (13a) comprises a first collecting basin (13), wherein the first collecting basin (13) has a first basin wall (25) and a first basin base (24), wherein, in a predetermined installation state, which defines an orientation of the oil guide channel part (1) in the transmission housing (140) relative to gravitational force (G), the oil guide channel part (1) is arranged in the transmission housing (140) in such a way that the receiving opening (11) is positioned at the end face of the gearwheel (107), which is arranged at least partially in the oil sump (150), and the first basin base (24) is positioned above the gearwheel (107), and the oil conducting direction (F) from the receiving opening (11) to the outlet opening (12) extends counter to gravitational force (G), **characterized in that** that the transmission has a drive shaft (101) and an output shaft (102), wherein the output shaft (102) is able to be driven by means of the gearwheel (107), wherein a coupling element (122) is coupled to the gearwheel (107) in such a way that the gearwheel (107) can be driven by means of the coupling element (122), wherein a clutch device (120) with a clutch element (121) is provided in the transmission, wherein the clutch element (121) is coupled in a rotationally conjoint manner to the drive shaft (101), wherein, by means of the clutch device (120), the clutch element (121) can be coupled in a rotationally conjoint manner to the coupling element (122) and decoupled from the latter, and wherein the oil guide channel part (1) has a first outflow (15) which protrudes above the first basin base (24) from the first basin wall (25) and which has an outflow opening (17) through which outflowing oil is guided to a bearing (176) of a pinion (106) mounted rotatably on the drive shaft (101) and coupled in a rotationally conjoint manner to the coupling element (122).

2. Transmission (100) according to Claim 1, **characterized in that** an end of the channel wall (21) of the conducting channel (2) remote from the receiving opening (11) forms a peripheral wall (21a), which projects over the first basin base (24) of the first collecting basin (13) and delimits the outlet opening (12), in such a way that oil exiting from the outlet opening (12) of the conducting channel (2) accumulates in the first collecting basin (13) in a manner flowing out in the direction of gravitational force (G).

3. Transmission (100) according to either of the preceding claims, **characterized in that** the conducting channel (2) is straight and, at least in the region of the gearwheel (107), runs tangentially to an end face of the gearwheel (107), and the receiving opening (11) is positioned in the immediate vicinity of the end face of the gearwheel (107).

4. Transmission (100) according to Claim 1, **characterized in that** the drive shaft (101) is in the form of a hollow shaft with an axial bore (173), wherein the pinion (106) meshes with the gearwheel (107), wherein oil flowing out from the outflow opening (17) of the first outflow (15) passes into the axial bore (173) of the drive shaft (101) and, from there, to the bearing (176) via at least one radial bore (174), wherein the bearing (176) is in particular in the form of a needle roller bearing.

5. Transmission (100) according to Claim 4, **characterized in that** the oil flowing out from the outflow opening (17) of the first outflow (15) passes into a chamber (146) which is formed at a first housing part (141) of the transmission housing (140) and in which a pressure disc (180) is arranged, wherein a channel portion (181) is formed centrally on the pressure disc (180), wherein the channel portion (181) engages into the axial bore (173) of the drive shaft (101), wherein oil contained in the chamber (146) flows out into the channel portion (181) via the pressure disc (180) and thus passes into the axial bore (173) of the drive shaft (101).

6. Transmission (100) according to one of the preceding claims, **characterized in that** a rotor shaft (103) of an electrical machine (110), which rotor shaft is mounted in the transmission housing in at least one bearing (175), is provided, wherein the drive shaft (101) can be driven by means of the rotor shaft (103), and **in that** the oil collecting region (13a) of the oil guide channel part (1) comprises a second collecting basin (14), wherein the second collecting basin (14) has a second basin wall (27) and a second basin base (26), wherein the second collecting basin (14) is connected to the first collecting basin (13) via a connecting channel (29), wherein a second outflow (16) protrudes in the predetermined installation direction above the second basin base (26) from the second basin wall (27) of the second collecting basin (14) and has an outflow opening (18) through which oil is guided in the direction of the bearing (175) of the rotor shaft (103).

7. Transmission (100) according to Claim 6, **characterized in that** the edge of the peripheral wall (21a), on a side facing towards the first collecting basin (13), is at a distance from the first basin base (24) which is smaller than the distance of the edge of the peripheral wall (21a) from the second basin base (26) on a side facing towards the second collecting basin (14), and **in that**, when the gearwheel (107) rotates, firstly oil passes into the first collecting basin (13) before oil passes into the second collecting basin (14) via the connecting channel (29).

8. Transmission (100) according to one of the preceding claims, **characterized in that** the transmission housing (140) has a first housing part (141) with a first housing wall region (143) and has a second housing part (142), mounted onto the first housing part (141), with a second housing wall region (144), wherein, in the bearing region of the first housing part (141) and the second housing part (142), a third housing wall region (145) is placed, wherein the first housing wall region (143), the second housing wall region (144) and the third housing wall region (145) surround on three sides an end of the gearwheel (107) remote from the oil guide channel part (1) in the oil sump (150).

9. Transmission according to Claim 8, **characterized in that** a pump system is formed by the first housing wall region (143), the second housing wall region (144), the third housing wall region (145), the gearwheel (107) and the conducting channel (2), by way of which oil is transported from the oil sump (150) through the conducting channel (2) counter to gravitational force (G) to the outlet opening (12) of the conducting channel (2) when the gearwheel (107) rotates.

10. Transmission (100) according to one of the preceding claims, **characterized in that** the gearwheel (107) is coupled in a rotationally conjoint manner to a differential (130) of the transmission (100), wherein a first output shaft (102a) and a second output shaft (102b) are coupled to the differential (130), wherein the first output shaft (102a) and the second output shaft (102b) are driven in rotation by way of the differential (103).

## Revendications

1. Transmission (100), en particulier transmission de véhicule automobile, comprenant un boîtier de transmission (140) et au moins un engrenage de transmission (107) disposé dans le boîtier de transmission (140), l'engrenage de transmission (107) étant disposé au moins partiellement dans un carter d'huile (150) de la transmission (100), la transmission (100) comprenant une pièce de conduit d'huile (1), la pièce de conduit d'huile (1) comprenant un conduit (2) avec un orifice d'entrée (11) et un orifice de sortie (12), le conduit (2) ayant une direction d'acheminement d'huile (F) de l'orifice d'entrée (11) jusqu'à l'orifice de sortie (12) et une paroi de conduit (21) fermée circonféren-tiellement perpendiculairement à la direction d'acheminement d'huile (F), la pièce de conduit d'huile (1) comprenant en outre au moins une région de collecte d'huile (13a) pour la collecte de l'huile acheminée par le conduit (2), la pièce de conduit d'huile (1) comprenant au moins un drain (15a) pour l'huile provenant de ladite au moins une région de collecte d'huile (13a), la pièce de conduit d'huile (1) étant disposée dans le boîtier de transmission (100) de sorte que, pendant le fonctionnement, l'huile projetée depuis le carter d'huile (150) par l'engrenage de transmission (107) pénètre dans l'orifice d'entrée (11) et s'écoule le long de la direction d'acheminement d'huile (F) du conduit (2) jusqu'à l'orifice de sortie (12), ladite au moins une région de collecte d'huile (13a) comprenant un premier réservoir (13), le premier réservoir (13) ayant une première paroi de réservoir (25) et une première base de réservoir (24), la pièce de conduit d'huile (1) étant disposée dans le boîtier de transmission (140), dans un état de montage prédéterminé qui définit une orientation de la pièce de conduit d'huile (1) dans le boîtier de transmission (140) par rapport à la pesanteur (G), de sorte que l'orifice d'entrée (11) est positionné au niveau de la face d'extrémité de l'engrenage de transmission (107) disposé au moins partiellement dans le carter d'huile (150) et que la première base de réservoir (24) est positionnée au-dessus de l'engrenage de transmission (107) et la direction d'acheminement d'huile (F) s'étend de l'orifice d'entrée (11) jusqu'à l'orifice de sortie (12) à l'opposé de la direction de la pesanteur (G), **caractérisée en ce que** la transmission comprend un arbre d'entrée (101) et un arbre de sortie (102), l'arbre de sortie (102) pouvant être entraîné au moyen de l'engrenage de transmission (107), un élément de couplage (122) étant couplé à l'engrenage de transmission (107) de sorte que l'engrenage de transmission (107) peut être entraîné au moyen de l'élément de couplage (122), un dispositif d'embrayage (120) avec un élément d'embrayage (121) étant prévu dans la transmission, l'élément d'embrayage (121) étant couplé en rotation solidairement à l'arbre d'entrée (101), l'élément d'embrayage (121) pouvant être couplé en rotation solidairement à l'élément de couplage (122) et découplé de celui-ci au moyen du dispositif d'embrayage (120), et la pièce de conduit d'huile (1) ayant un premier drain (15) qui dépasse de la première paroi de réservoir (25) au-dessus de la première base de réservoir (24) et qui présente un orifice de drain (17) à travers lequel l'huile qui s'écoule est acheminée vers un palier (176) d'un pignon (106) monté tournant sur l'arbre d'entrée (101) et couplé en rotation solidairement à l'élément de couplage (122).

2. Transmission (100) selon la revendication 1, **caractérisée en ce qu'**une extrémité de la paroi de conduit (21) du conduit (2) qui est tournée à l'opposé de l'orifice d'entrée (11) forme une paroi circonférentielle (21a) s'étendant au-delà de la première base de réservoir (24) du premier réservoir (13) et délimitant l'orifice de sortie (12), de sorte que l'huile sortant de l'orifice de sortie (12) du conduit (2) s'accumule dans le premier réservoir (13) en s'écoulant dans la direction de la pesanteur (G).

3. Transmission (100) selon l'une des revendications précédentes, **caractérisée en ce que** le conduit (2) est de forme rectiligne et s'étend, au moins dans la zone de l'engrenage de transmission (107), tangentiellement à une face d'extrémité de l'engrenage de transmission (107) et **en ce que** l'orifice d'entrée (11) est positionné à proximité immédiate de la face d'extrémité de l'engrenage de transmission (107).

4. Transmission (100) selon la revendication 1, **caractérisée en ce que** l'arbre d'entrée (101) est conçu sous forme d'arbre creux ayant un alésage axial (173), le pignon (106) s'engrenant avec l'engrenage de transmission (107), l'huile s'écoulant de l'orifice de drain (17) du premier drain (15) pénétrant dans l'alésage axial (173) de l'arbre d'entrée (101) et de là, via au moins un alésage radial (174), parvenant au palier (176), le palier (176) étant en particulier conçu sous forme de palier à aiguilles.

5. Transmission (100) selon la revendication 4, **caractérisée en ce que** l'huile s'écoulant de l'orifice de drain (17) du premier drain (15) pénètre dans une chambre (146) formée sur une première partie de boîtier (141) du boîtier de transmission (140), dans laquelle est disposé un disque de retenue (180), un segment de canal (181) étant formé de manière centrée sur le disque de retenue (180), le segment de canal (181) s'engageant dans l'alésage axial (173) de l'arbre d'entrée (101), l'huile contenue dans la chambre (146) s'écoulant via le disque de retenue (180) dans le segment de canal (181) et parvenant ainsi dans l'alésage axial (173) de l'arbre d'entrée (101).

6. Transmission (100) selon l'une des revendications précédentes, **caractérisée en ce qu'**il est prévu un arbre de rotor (103) d'une machine électrique (110), monté dans au moins un palier (175) dans le boîtier de transmission, l'arbre d'entrée (101) pouvant être entraîné au moyen de l'arbre de rotor (103), et **en ce que** la région de collecte d'huile (13a) de la pièce de conduit d'huile (1) comprend un deuxième réservoir (14), le deuxième réservoir (14) ayant une deuxième paroi de réservoir (27) et une deuxième base de réservoir (26), le deuxième réservoir (14) étant en communication avec le premier réservoir (13) via un canal de liaison (29), un deuxième drain (16) dépassant de la deuxième paroi de réservoir (27) du deuxième réservoir (14) au-dessus de la deuxième base de réservoir (26) dans la direction de montage prédéterminée et présentant un orifice de drain (18) par l'intermédiaire duquel l'huile est acheminée vers le palier (175) de l'arbre de rotor (103).

7. Transmission (100) selon la revendication 6, **caractérisée en ce que** le bord de la paroi circonférentielle (21a) présente, sur un côté faisant face au premier réservoir (13), une distance par rapport à la première base de réservoir (24) qui est inférieure à la distance du bord de la paroi circonférentielle (21a) par rapport à la deuxième base de réservoir (26) sur un côté faisant face au deuxième réservoir (14), et **en ce que**, lors d'une rotation de l'engrenage de transmission (107), l'huile pénètre d'abord dans le premier réservoir (13) avant de passer dans le deuxième réservoir (14) via le canal de liaison (29).

8. Transmission (100) selon l'une des revendications précédentes, **caractérisée en ce que** le boîtier de transmission (140) comporte une première partie de boîtier (141) ayant une première zone de paroi de boîtier (143) et une deuxième partie de boîtier (142) montée sur la première partie de boîtier (141) ayant une deuxième zone de paroi de boîtier (144), une troisième zone de paroi de boîtier (145) étant appliquée dans la zone de contact de la première partie de boîtier (141) et de la deuxième partie de boîtier (142), la première zone de paroi de boîtier (143), la deuxième zone de paroi de boîtier (144) et la troisième zone de paroi de boîtier (145) entourant sur trois côtés une extrémité de l'engrenage de transmission (107) qui est opposée à la pièce de conduit d'huile (1) dans le carter d'huile (150).

9. Transmission selon la revendication 8, **caractérisée en ce qu'**un système de pompe est formé par la première zone de paroi de boîtier (143), la deuxième zone de paroi de boîtier (144), la troisième zone de paroi de boîtier (145), l'engrenage de transmission (107) et le conduit (2), par l'intermédiaire duquel, lors d'une rotation de l'engrenage de transmission (107), de l'huile provenant du carter d'huile (150) est transportée à travers le conduit (2) à l'opposé de la direction de la pesanteur (G) jusqu'à l'orifice de sortie (12) du conduit (2).

10. Transmission (100) selon l'une des revendications précédentes, **caractérisée en ce que** l'engrenage de transmission (107) est couplé solidairement en rotation à un différentiel (130) de la transmission (100), un premier arbre de sortie (102a) et un deuxième arbre de sortie (102b) étant couplés au différentiel (130), le premier arbre de sortie (102a) et le deuxième arbre de sortie (102b) étant entraînés en rotation par le différentiel (103).
